# EUROPÄISCHE PATENTSCHRIFT

(11) **EP 1 101 142 B1**
(45) Veröffentlichungstag und Bekanntmachung des Hinweises auf die Patenterteilung: **31.03.2004**
(21) Anmeldenummer: 00935060.4
(22) Anmeldetag: 18.05.2000
(51) Int. Cl.: G02B 21/24

(54) **VERFAHREN UND ANORDNUNG ZUR LAGEERFASSUNG EINER MIT EINEM LASER-SCANNER ABZUTASTENDEN EBENE**
METHOD AND ARRAY FOR DETECTING THE POSITION OF A PLANE SCANNED WITH A LASER SCANNER
PROCEDE ET DISPOSITIF POUR DETECTER LA POSITION D'UN PLAN A EXPLORER PAR BALAYAGE AU LASER

(30) Priorität: 19.05.1999 DE 19923821
(43) Veröffentlichungstag der Anmeldung: 23.05.2001
(73) Patentinhaber: CARL ZEISS JENA GmbH, 07745 Jena (DE)
(72) Erfinder: MÜHLHOFF, Dirk, D-07743 Jena (DE); RUDOLPH, Günther, D-07743 Jena (DE); SCHMIDT, Stefan, D-07745 Jena (DE); DÖRING, Gerhard, D-07646 Schlöben (DE); BERTHEL, Günter, D-07743 Jena (DE); HARTMANN, Thomas, D-07749 Jena (DE)
(86) Internationale Anmeldenummer: PCT/EP2000/004493
(87) Internationale Veröffentlichungsnummer: WO 2000/072078

(56) Entgegenhaltungen:
- WO-A-98/35256
- DE-A- 19 726 696
- US-A- 5 783 814
- US-A- 5 790 710

## Beschreibung

Die Erfindung bezieht sich auf ein Verfahren und auf eine Anordnung zur Lageerfassung der abzutastenden Ebene XY eines Objektes und zu deren Positionierung in der Fokusebene X'Y' eines Laser-Scanners, vorzugsweise bei einem Laser-Scan-Mikroskop.

In den letzten zwei Jahrzehnten haben Scanner einen fortgeschrittenen Stand der Technik erreicht. Insbesondere in der Medizintechnik, in der Meßtechnik und vor allem auch in der Mikroskopie werden immer häufiger Objekte mit einem Laserstrahl abgetastet. Zum Beispiel weisen Laser-Scan-Mikroskope gegenüber den konventionellen Mikroskopen im biologisch-medizinischen Bereich klare Vorteile auf, die im wesentlichen auf die erreichbare höhere Auflösung zurückzuführen sind und auf die Möglichkeit, bestimmte Tiefenschichten zu differenzieren.

So ist in der Fluoreszenzmikroskopie aufgrund der hohen punktuellen Intensität des fokussierten Laserstrahles die Ausnutzung der Empfindlichkeit von Photovervielfachern für einen Bildaufbau bei selbst schwachen Fluoreszenzen möglich. Allerdings setzen XY-Scanner eine sehr hohe Positioniergenauigkeit bei der Ausrichtung der abzutastenden Objekte zur Fokussierebene des Mikroskops voraus.
Aus US -A-5783814 ist es bekannt, die optisch abzutastende XY-Ebene eines Objektes auf einem Objekttisch eines Mikroskopes grob auszurichten.
Je höher die Tiefenauflösung ist, um so präziser muß die zu untersuchende Ebene der Probe in den Fokus des Laserstrahles gebracht werden, um Intensitätsverluste zu vermeiden bzw. einer mangelnden Bildqualität vorzubeugen.

Insofern ist es im Zusammenhang mit der immer noch fortschreitenden Entwicklung auf diesem technischen Gebiet erforderlich, Verfahren und Anordnungen zur exakten und nach Möglichkeit selbsttätigen Ausrichtung der Objekte bzw. abzutastenden Ebenen relativ zur Fokusebene zur Verfügung zu stellen. Die noch häufig angewendete Positionierung über feinfühlig zustellbare manuelle Antriebe mit wiederholter Positionskorrektur genügt den Anforderungen in der Regel nicht mehr.

Davon ausgehend liegt der Erfindung die Aufgabe zugrunde, ein Verfahren anzugeben, mit dem eine selbsttätige und genaue Positionierung einer abzutastenden Ebenen XY in der Fokusebene X'Y' eines Laser-Scanners möglich ist.

Erfindungsgemäß ist bei einem Verfahren der eingangs beschriebenen Art vorgesehen, daß nach einer Grobausrichtung des Objektes, die mit dem Fixieren auf einer Objekthalterung erfolgt, zeitlich nacheinander auf mindestens drei verschiedene, in der abzutastenden Ebene XY des Objektes liegende Punkte P₁,P₂...Pₙ ein Laserstrahl gelenkt und dabei jeweils die von den Punkten P₁,P₂...Pₙ ausgehenden Reflexe auf einen positionsempfindlichen Detektor abgebildet werden, dort für jeden der Reflexe ein Ist-Positionswert ermittelt und dieser mit einem gespeicherten Soll-Posionswert verglichen wird, aus den Abweichungen der Ist- von den Soll-Positionswerten Stellbefehle zur Neigungsänderung der Objekthalterung gewonnen und auf der Grundlage dieser Stellbefehle die Neigungsänderung der Objekthalterung soweit veranlaßt wird, bis sich die Punkte P₁,P₂...Pₙ in der Fokusebene X'Y' des Laser-Scanners befinden.

Die wesentlichen Vorteile dieses Verfahrens bestehen darin, daß zur Positionsermittlung weitestgehend die Baugruppen verwendet werden können, die ohnehin in einem Laser-Scanner vorhanden sind, wie beispielsweise die Positionsgeber für den Laserstrahl sowie die optischen Elemente zur Übertragung der von der Probe reflektierten Laserstrahlung auf eine optoelektronische Empfangseinrichtungen mit nachfolgender Auswerteeinheit. Außerdem ist auf diese Weise die Positionierung nicht nur genauer, sondern auch wesentlich schneller als mit allen bisher bekannten Verfahren möglich.

In einer bevorzugten Ausgestaltung des erfindunsgemäßen Verfahrens ist vorgesehen, daß drei Punkte P₁(x₁;y₁), P₂(x₂;y₂) und P₃(x₃;y₃) mit y₁=y₂=x₃=0 und x₁=-x₂≠0; y₃≠0 angetastet werden, wobei ein Punkt P₀ mit x₀=y₀=0 etwa im Zentrum des Objektes bzw. der abzutastenden Ebene XY liegt, P₁,P₂,P₃ bevorzugt Punkte nahe der Objektränder sind und wobei die Ermittlung der Abweichungen zwischen Ist- und Soll-Positionswerten nach dem Prinzip der Laser-Triangulation erfolgt.

Somit sind drei Punkte P₁,P₂,P₃ definiert, die zur Positionserkennung vorteilhaft geeignet sind, da sie erstens aufgrund ihrer Lage an den Objekträndern bzw. an den Rändern der abzutastenden Ebene XY weit auseinander liegen, was gute Voraussetzungen für die Laser-Triangulation schafft, und zweitens auch unkompliziert ansteuerbar sind, wenn man davon ausgeht, daß der Punkt P₀ etwa die Ausgangsposition des Laserstrahles im Koordinatenursprung der Fokusebene X'Y' definiert.

Bei der Triangulation wird mittels des Laserstrahles ein Lichtpunkt auf die abzutastende Ebene des Meßobjektes projiziert und das reflektierte Licht auf einen positionsempfindlichen Detektor abgebildet. Dabei ist in Abhängigkeit vom Abstand zwischen der abzutastenden Ebene XY und dem Objektiv, gemessen in der Koordinate Z, die Position des Reflexes auf dem Detektor verschieden. Das vom Detektor ausgegebene Signal ist somit ein Maß für den Abstand der reflektierenden Fläche zum Objektiv bzw. ein Maß dafür, ob der reflektierende Punkt im Fokus des Objektivs liegt oder nicht.

Erfindungsgemäß wird das Objekt zunächst so ausgerichtet, daß der Laserstrahl etwa auf die Position P₀ gerichtet ist, dann die Scan-Einrichtung so angesteuert, daß der Laserstrahl auf den Punkt P₁ gerichtet ist, ggf. eine Parallelverschiebung der Objekthalterung in Z-Richtung veranlaßt, bis der Reflex von P₁ ein eindeutiges Signal auf dem Detektor liefert, nun der Ist-Positionswert für den Punkt P₁ erfaßt, dann die Scan-Einrichtung so angesteuert, daß der Laserstrahl auf den Punkt P₂ gerichtet ist, jetzt der Ist-Positionswert für den Punkt P₂ erfaßt, aus den Abweichungen der Ist- zu den Soll-Positionswerten Stellbefehle zur Verkippung der Objekthalterung um die Y-Achse ermittelt und somit die Ausrichtung der X-Achse der Ebene XY parallel zur Fokusebene X'Y' veranlaßt, hiernach die Scan-Einrichtung so angesteuert, daß der Laserstrahl auf den Punkt P₃ gerichtet ist, der Ist-Positionswert für den Punkt P₃ erfaßt und schließlich aus der Abweichung von Ist- zu Soll-Positionswert des Punktes P₃ ein Stellbefehl zur Verkippung der Objekthaltung um die X-Achse ermittelt und damit auch die Parallelausrichtung der Y-Achse der Ebene XY zur Fokusebene X'Y' veranlaßt.

In einer besonders bevorzugten Ausgestaltung der Erfindung ist vorgesehen, daß die genannten Schritte wiederholt werden, um gegebenenfalls noch vorhandene Abweichungen zu ermitteln und in der beschriebenen Weise nachzustellen, bis keine Abweichungen mehr meßbar sind bzw. die Parallelität der Ebenen XY mit der Fokusebene X'Y' eingestellt ist.

Im Rahmen der Erfindung liegt es weiterhin, daß nach dieser Ausrichtung der Ebene XY eine Parallelverschiebung in Z-Richtung vorgenommen wird und zwar so weit, bis die Reflexe von P₁,P₂,P₃ mit maximaler Intensität auf den Detektor abgebildet werden. Damit wird mit hoher Sicherheit gewährleistet, daß die abzutastende Ebene XY nicht nur parallel zur Fokusebene X'Y' ausgerichtet ist, sondern mit dieser zusammenfällt.

Aufgabe der Erfindung ist es weiterhin, eine Anordnung zur Ausführung der vorgenannten Verfahrensschritte bzw. zur Lageerfassung der abzutastenden Ebene XY eines Objektes und zu deren Positionierung in der Fokusebene X'Y' eines Laser-Scanners, bevorzugt eines Laser-Scan-Mikroskopes, zu schaffen.

Diese Aufgabe wird erfindungsgemäß gelöst mit einer Anordnung, die ausgestattet ist mit einer Objekthaltung zur Aufnahme des Objektes, mit einem positionsempfindlichen Detektor zur Lokalisierung der Reflexe von drei in der Ebene XY liegenden und mit einem Laserstrahl nacheinander oder zeitgleich angetasteten Punkte P₁,P₂,P₃, mit einer Auswerteschaltung zur Bestimmung der Abweichungen des Ist-Positionswertes eines jeden dieser Reflexe von dessen Soll-Positionswert auf dem Detektor und mit einer mit der Auswerteschaltung verbundenen Stelleinrichtung zur Neigungsänderung der Objekthalterung relativ zur Fokusebene X'Y' des Laser-Scanners.

Bevorzugt bezieht sich die erfindungsgemäße Anordnung auf einen im Stand der Technik an und für sich bekannten Laser-Scanner, der einen auf einer drehbaren Achse gelagerten Spiegel zur Ablenkung eines Laserstrahles in Richtung der Koordinate X' aufweist und bei dem die Objekthalterung in Richtung der Koordinate Y' geradlinig verschiebbar ist, wobei die Bewegungsabläufe über mit Positionsmeldern gekoppelte Antriebe steuer- und kontrollierbar sind.

In einer bevorzugten Ausgestaltung der Erfindung ist der Detektor als CCD-Zeile mit 256 Pixeln ausgebildet und Bestandteil einer Triangulations-Baugruppe, in der weiterhin mindestens eine Laserdiode als separate Strahlungsquelle zur Antastung der Punkte P₁,P₂,P₃, bevorzugt mit einer Laserwellenlänge λ≥780nm und eigener Ansteuerung, und eine Optik zur Einkopplung der Diodenstrahlung z.B. in den oo-Strahlengang des Laser-Scanners vorgesehen sind.

Besonders vorteilhaft ist es, wenn die Diodenstrahlung ein gaußförmiges Intensitätsprofil aufweist und die Ist-Positionen der von den Punkten P₁,P₂,P₃ reflektierten Diodenstrahlung auf der CCD-Zeile jeweils durch den Schwerpunkt der Gauß-Funktion definiert sind. Die Schritte zur Bestimmung des Schwerpunktes gehören zum Stand der Technik und sollen deshalb hier nur kurz angedeutet werden:

Auf der CCD-Zeile wird zunächst das Pixel mit der maximalen Intensität sowie das Niveau des Grundsignales ermittelt. Aus diesen Werten wird die Halbwertshöhe der Gauß-Funktion berechnet und es werden die Schnittpunkte der Gauß-Funktion mit der Halbwertshöhe bestimmt, wobei zwischen den Pixeln linear interpoliert wird. Der Mittelwert zwischen den Schnittpunkten gibt näherungsweise den Schwerpunkt an. Durch die Interpolation erhält man den Schwerpunkt mit einer Auflösung, die besser ist als die Pixelgröße und nur durch das Rauschen sowie Abweichungen des Meßsignales von der angenommenen Gaußfunktion begrenzt wird.

Erfindungsgemäß ist weiterhin vorgesehen, daß in der Auswerteschaltung ein Speicher mit (den Punkten P₁,P₂,P₃ zugeordneten) Soll-Positionswerten vorgesehen ist, wobei die Soll-Position jeweils bevorzugt in der Mitte der CCD-Zeile definiert ist und die Auswerteeinheit weiterhin über einen Differenzbildner verfügt, an dessen Eingängen bei jeder Auswertung jeweils ein Ist-Positionswert und ein Soll-Positionswert anliegen, jeweils bezogen auf einen der Punkte P₁,P₂,P₃, und an dessen Ausgang ein Differenzsignal als Stellsignal für die mit der Objekthalterung gekoppelte Stelleinrichtung abgreifbar ist.

Die Stelleinrichtung ist vorteilhaft so ausgebildet, daß sie drei separat in Richtung der Koordinate Z zustellbare Antriebselemente aufweist, von denen jedes mit der Objekthalterung über einen gesonderten Anlenkpunkt A₁,A₂,A₃ mechanisch verbunden ist. Dabei liegen die Anlenkpunkte A₁,A₂,A₃ ebenso wie die Punkte P₁,P₂,P₃ in der Ebene XY. Außerdem befinden sich die Anlenkpunkte A₁ und A₂ mit den Punkten P₁ und P₂ auf derselben Geraden, die auch durch den Koordinatenursprung P₀ geht und so die X-Achse bildet, während die Punkte A₃, P₃ und der Koordinatenursprung ebenfalls auf einer gemeinsamen Geraden, nämlich der Y-Achse, liegen.

Aufgrund dieser Anordnung im Zusammenhang mit der separaten Ansteuerbarkeit der Antriebselemente ist gewährleistet, daß die Objekthalterung beispielsweise um die Y-Achse gekippt werden kann, wenn die Anlenkpunkte A₁ und A₂ gegenläufig angesteuert werden, während der Anlenkpunkt A₃ in relativer Ruhe verbleibt. Weiterhin besteht so die Möglichkeit, die Objekthalterung definiert um die X-Achse zu kippen, sofern lediglich der Anlenkpunkt A₃ angesteuert wird und die Anlenkpunkte A₁ und A₂ in relativer Ruhe verbleiben.

Diese erfindungsgemäße Ausgestaltung der Stelleinrichtung hat vorteilhaft zur Folge, daß die Winkel-Stellbewegungen um die X-Achse einerseits und die Y-Achse andererseits unabhängig voneinander vorgenommen werden können und darauf verzichtet werden kann, die X-Achse nachzuführen, während die Y-Achse bewegt wird und umgekehrt.

Vorteilhaft ist weiterhin vorgesehen, das als Antriebselemente piezoelektrische Antriebe oder, in einer alternativen Ausführung, mit Rotationsantrieben gekoppelte feingängige Gewindespindeln vorgesehen sind. Weiterhin kann der Stellmechanismus so ausgebildet sein, daß die Antriebselemente in Ausnehmungen der Objekthalterung eingreifen, die Antriebselemente innerhalb der Ausnehmungen an der Objekthaltung nach dem Kugel/Kalotten-Prinzip anliegen und Antriebselemente und Objekthalterung durch Federn elastisch gegeneinander vorgespannt sind, wodurch sich eine spielfreie Lagerung ergibt.

Selbstverständlich sind auch anderweitige Ausbildungen der Antriebselemente denkbar, so beispielsweise in Führungen verschiebliche Bolzen, die einerseits an den Anlenkpunkten A₁,A₂,A₃ anliegen und andererseits mit Exenterflächen in Berührung stehen, wobei die Exenter von Schrittmotoren, die zur Erzielung der erforderlichen Präzision mit entsprechenden Getrieben ausgestattet sind, angetrieben werden.

Der Vollständigkeit halber sei darauf hingewiesen, daß die Erfindung zwar anhand des Triangulations-Prinzips zur Erfassung der von den Punkten P₁,P₂,P₃ reflektierten Laserstrahlung erläutert worden ist, was jedoch nicht ausschließt, daß hier auch andere Mittel zur Lageerkennung dieser Reflexe genutzt werden können. Es sei diesbezüglich lediglich die Möglichkeit angedeutet, einen kollimierten symmetrischen Laserstrahl senkrecht auf die Ebene XY zu richten und den Reflex über eine Zylinderlinse auf eine Quadrantendiode abzubilden. Hierbei ist die Elliptizität des Fokus auf der Quadrantendiode ein Maß für die Lageabweichung des mit dem Laserstrahl beaufschlagten Punktes von der Fokusebene. Auch ist beispielsweise ein Kontrastbestimmungsverfahren anwendbar, bei dem bei laufender Abtastung der Abstand der Punkte P₁,P₂,P₃ solange geändert wird, bis eine aus dem ermittelten Bild abgeleitete Kontrastfunktion ihr Maximum hat. Dabei kann sowohl ein einfacher Kontrast bestimmt werden als auch das Frequenzspektrum der Bildinformationen.

Die vorbeschriebene Erfindung ist insbesondere vorteilhaft anwendbar zu Abtastung der Plattenböden von Mikrotiterplatten und Bio-Chips, in denen sich fluoreszierende Proben befinden. Dabei ist allerdings zu berücksichtigen, daß die Laserstrahlung zweimal reflektiert wird, nämlich einmal von der Unterseite und ein zweites Mal von der Innenseite des Plattenbodens. Das heißt, es können je nach Ortsauflösung ein oder auch zwei Laserreflexe auf der CCD-Zeile erscheinen. Da sich die Innenseite näher an der abzutastenden Probe befindet, wird bevorzugt diese reflektierende Fläche zur Ausrichtung verwendet.

Unter Umständen ist es auch vorteilhaft, wenn in der Triangulations-Baugruppe nicht nur eine, sondern auch noch eine zweite Laserdiode (zusätzlich zur Laserstrahlungsquelle, die zur Fluorenszenzmikroskopie der Probe vorgesehen ist) vorhanden ist, wobei zwar stets nur eine aktiv sein muß, auf diese Weise jedoch den stark unterschiedlichen Aperturen verschiedener Objektive Rechnung getragen werden kann.

In einer weiteren Ausgestaltung kann ein mechanischer Shutter vorhanden sein, der den Mikroskopierlaserstrahl während der Ausrichtung der Ebene XY blockiert. Damit wird einem ungewollten Ausbleichen der Probe vorgebeugt.

Die Erfindung soll nachfolgend an einem Ausführungsbeispiel näher erläutert werden. In den zugehörigen Zeichnungen zeigen:
- Fig.1: den prinzipiellen Aufbau eines Laser-Scanners mit der erfindungsgemäßen Anordnung
- Fig.2: eine Darstellung des Prinzips der Laser-Triangulation
- Fig.3a, 3b: das Prinzip der Ankopplung separater Antriebselemente an die Objekthalterung
- Fig.4: eine Draufsicht der Objekthalterung mit aufgelegtem Objekt

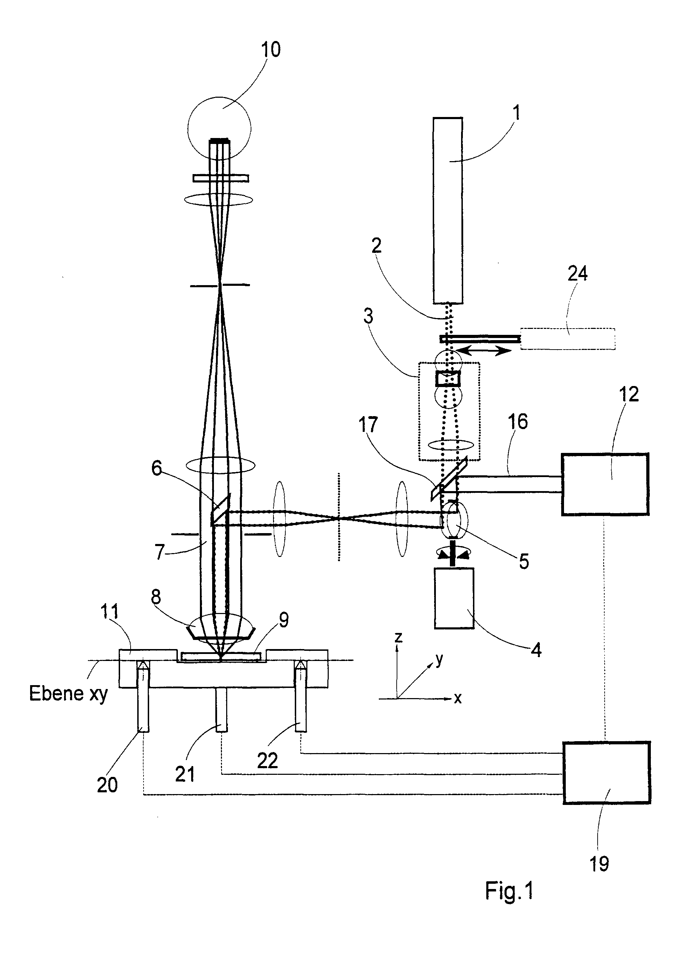

In Fig.1 ist das Prinzip eines Laser-Scan-Mikroskopes dargestellt, bei dem ein von einem Laser 1 ausgehender Laserstrahl 2 über eine strahlaufweitende Optik 3, einen Galvanometer-Scanner 4, der einen auf einer Drehachse gelagertern Spiegel 5 zur Ablenkung des Laserstrahles in der Koordinate X' aufweist, über einen Strahlteiler 6 in den Mikroskopstrahlengang 7 eingespiegelt wird.

Der Mikroskopstrahlengang 7 ist durch das Mikroskopobjektiv 8 hindurch auf ein Objekt 9 gerichtet. Bei dem Objekt 9 handele es sich beispielhaft um eine Mikrotiterplatte oder Bio-Chip zur Aufnahme von fluoreszierenden Proben. Die Plattenböden der Mikrotiterplatten werden als Ebene XY genutzt.

Die Auslesung der Probe anhand der in das Mikroskopobjektiv 8 zurückgeworfenen Fluoreszenzstrahlung erfolgt üblicherweise durch einen Photoempfänger 10.

Die Probe ist auf einer Objekthalterung 11 abgelegt, die in der Koordinate Y' (nicht dargestellt) verschiebbar ist, so daß durch Zusammenwirken des Galvanometer-Scanners 4 und der Verschiebung der Objekthalterung 11 eine Ebene XY mit dem Laserstrahl 2 abgetastet werden kann.

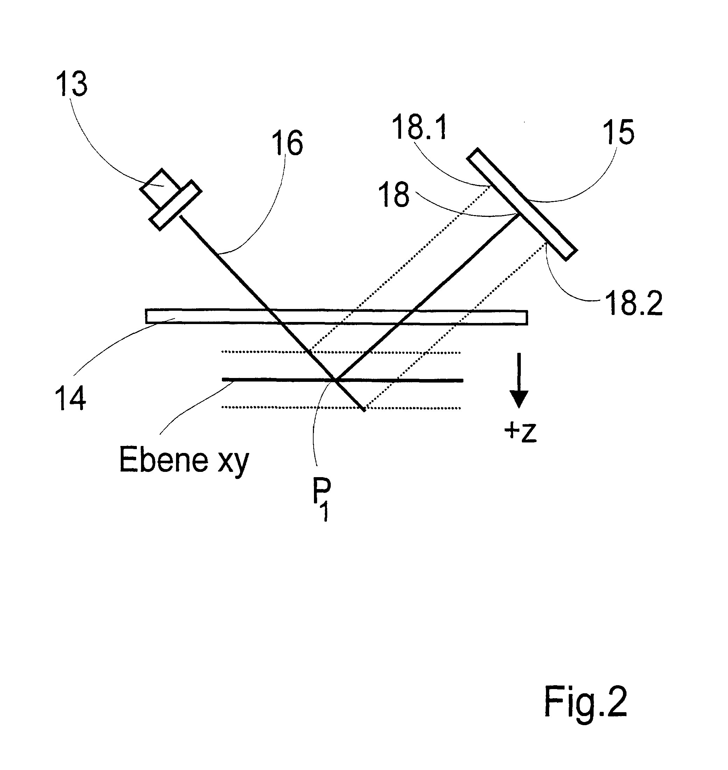

Um als Voraussetzung für eine hochwertige Bildgewinnung mit dieser Einrichtung zu gewährleisten, daß die abzutastende Ebene XY des Objektes 9 in der Fokusebene X'Y' des Laser-Scan-Mikroskopes positioniert ist, ist erfindungsgemäß eine Triangulations-Baugruppe 12 vorgesehen, deren prinzipieller Aufbau in Fig.2 dargestellt ist.

In Fig.2 ist zu erkennen, daß die Triangulations-Baugruppe 12 eine Laserdiode 13, die eine Laserstrahlung mit λ=780nm aussendet, eine Reader-Optik 14 und eine CCD-Zeile 15, beispielhaft mit 256 Pixeln, aufweist.

Das Prinzip der Laser-Triangulation und damit auch die Wirkungsweise der Triangulations-Baugruppe 12 sei anhand Fig.2 kurz erläutert: Die von der Laserdiode 13 ausgehende Diodenstrahlung 16 ist durch die Reader-Optik 14 hindurch auf die abzutastende Ebene XY des Objektes 9 gerichtet. Die Position, an welcher die Diodenstrahlung 16 auf die Ebene XY trifft, ist mit der Scan-Einrichtung des Laser-Scan-Mikroskopes beeinflußbar, indem der Galvanometer-Scanner 4 und die Tischsteuerung zur Verschiebung der Objekthalterung 11 in der Koordinate Y entsprechend angesteuert werden und die Diodenstrahlung 16, wie in Fig.1 dargestellt, über einen Strahlteiler 17 in den Unendlich-Strahlengang der Scan-Einrichtung eingespiegelt wird.

Zum Zwecke der Erläuterung sei angenommen, daß die Scan-Einrichtung so angesteuert wird, daß die Diodenstrahlung 16 auf einen Punkt P₁ der Ebene XY trifft (siehe Fig.2). Der von der Ebene XY reflektierte Diodenstrahl 16 tritt dann wiederum durch die Reader-Optik 14 hindurch und trifft bei der Position 18 auf die CCD-Zeile 15.

Aus Fig.2 wird weiter deutlich, daß sich mit der Veränderung des Abstandes der Ebene XY bzw. des Punktes P₁ von der Reader-Optik 14 bzw. damit auch vom Mikroskopobjektiv 8 die Position des auf die CCD-Zeile 15 treffenden Reflexes ändert. Wird unter Ausnutzung dieses Prinzips die Position 18 nun so definiert, daß sie den genauen Fokusabstand der Ebene XY im Punkt P₁ entspricht, so ist durch Vergleich beispielsweise der Positionen 18.1 oder 18.2 mit der gewünschten Position 18 durch Auswertung der dazwischen liegenden Pixel meßbar, um welchen Betrag die Lage des Punktes P₁ von der Fokuslage abweicht.

In Fig.1 ist nun weiterhin dargestellt, daß die Triangulations-Baugruppe 12 mit einer Auswerteschaltung 19 verbunden ist, die zur Ermittlung dieser Abweichungen ausgebildet ist. Zu diesem Zweck ist in der Auswerteschaltung 19 ein Differenzbildner vorgesehen, der für jeden beliebigen Punkt P₁,P₂...Pₙ, auf den die Diodenstrahlung 16 mit Hilfe der Scan-Einrichtung gerichtet wird, aus den Lageabweichungen in der vorbeschriebenen Weise ein Differenzsignal ermittelt.

Die Auswerteschaltung 19 ist erfindungsgemäß weiterhin über Signalwege mit drei unabhängig voneinander ansteuerbaren Antriebselementen 20,21,22 verbunden, die zur Verstellung der Objekthalterung 11 in Richtung der Koordinate Z ausgelegt sind. Als Antriebselemente 20,21,22 seien beispielhaft Feingewindespindeln vorgesehen, die mit ansteuerbaren Rotationsantrieben gekoppelt sind (zeichnerisch nicht im Detail dargestellt).

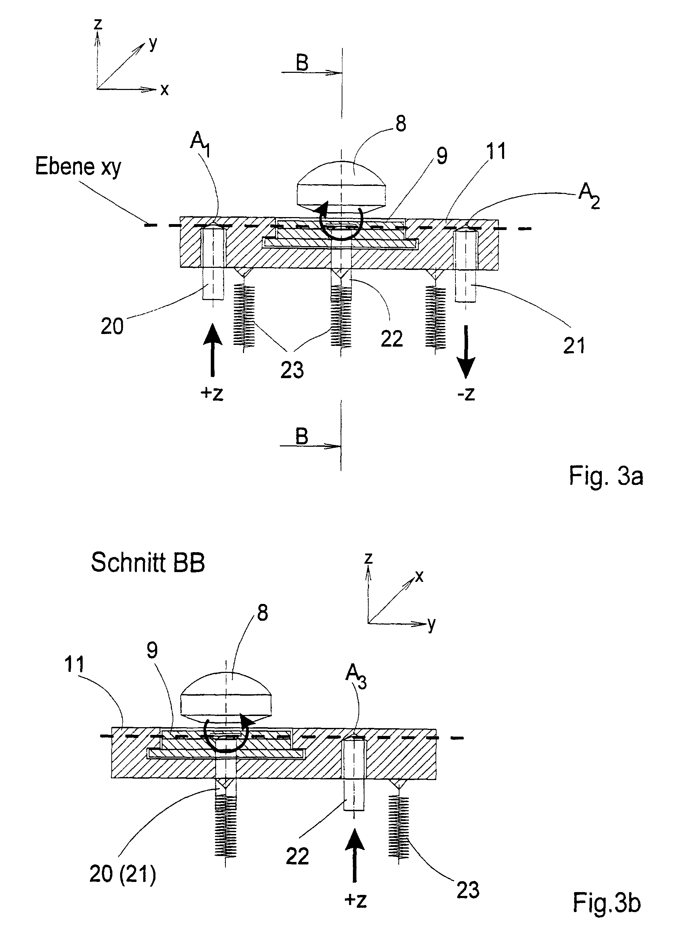

In Fig.3a und Fig.3b ist das Prinzip der mechanischen Kopplung zwischen den Antriebselementen 20,21,22 dargestellt, durch welche sich die im folgenden erläuterte Funktionsweise der Stelleinrichtung ergibt.

In Fig.3a und Fig.3b sind jeweils das Mikroskopobjektiv 8 und die Objekthalterung 11 zu erkennen. Weiterhin ist die Ebene XY angedeutet, in der die abzutastende Probe 9 liegt.

Fig.3a zeigt die Objekthalterung 11 in einem Schnitt durch die XZ-Ebene, wobei zu erkennen ist, daß die Anlenkpunkte A₁ und A₂, über die die Kraft- und Bewegungsübertragung von den Antriebselementen 20 und 21 auf die Objekthalterung 11 erfolgt, sowohl in der Ebene XY als auch in der XZ-Ebene (Zeichenebene) liegen. Beide Anlenkpunkte A₁ und A₂ sind also (etwa gleichweit vom Koordinatenursprung entfernt) in der X-Achse angeordnet.

Fig.3b zeigt den Schnitt BB aus Fig.3a und damit einen Schnitt durch die Ebene YZ. Hier ist erkennbar, daß der Anlenkpunkt A₃, über den das dritte Antriebselement 22 und die Objekthalterung 11 miteinander gekoppelt sind, sowohl in der Ebene YZ als auch in der Ebene XY und damit auf der Y-Achse liegt.

Bei der Ankopplung der Objekthalterung 11 an die Antriebselemente 20,21,22 handelt es sich demnach um eine Dreipunktauflage, wobei zwei der Auflagepunkte (A₁,A₂) in der X-Achse und der dritte Auflagepunkt (A₃) in der Y-Achse liegen.

Werden nun, wie in Fig.3a angedeutet, die Antriebselemente 20 und 21 gegenläufig in Richtung +z bzw. -z zugestellt und ruht das Antriebselement 22, erfolgt eine Neigungsänderung der Objekthalterung 11 und damit der abzutastenden Ebene XY um deren Y-Achse.

Anhand Fig.3b läßt sich dagegen erkennen, daß bei Zustellung des Antriebselementes 22 in Richtung +Z und bei ruhenden Antriebselementen 20 und 21 eine Verkippung der Objekthalterung um die X-Achse erfolgt.

In Fig.3a und Fig.3b sind weiterhin Zugfedern 23 angedeutet, die eine elastische Vorspannung der Objekthaltung 11 gegen die Antriebselemente 20,21,22 bewirken. Die Anlageflächen zwischen Objekthalterung 11 und Antriebselementen 20,21,22 seien bevorzugt als Kugel einerseits und Kalotte andererseits ausgebildet.

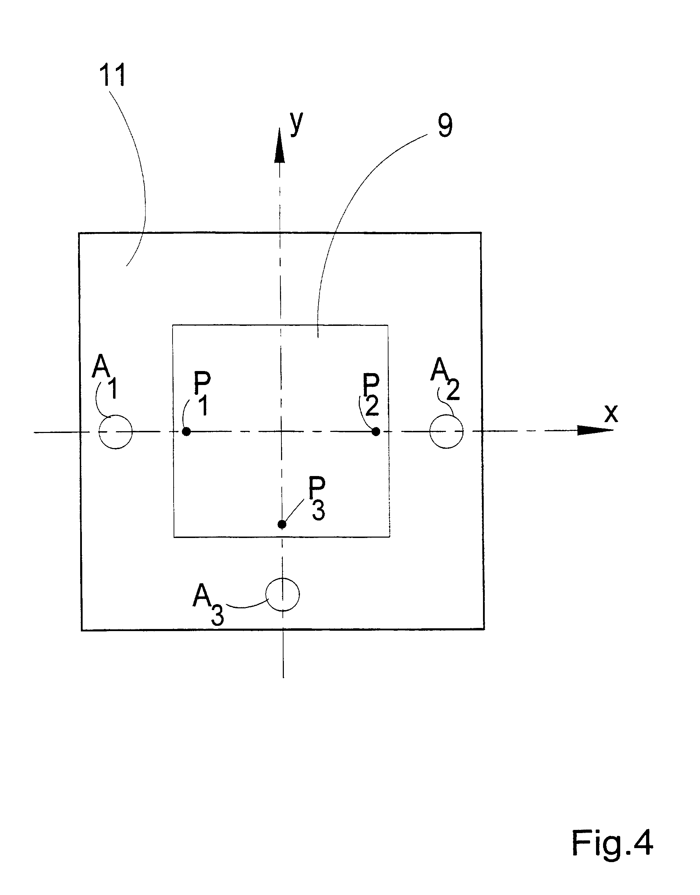

In Fig.4 ist die Objekthalterung 11 in einer vereinfachten Darstellung in Draufsicht erkennbar. Hier ist noch einmal die Positionierung der Anlenkpunkte A₁,A₂,A₃ verdeutlicht, wobei zu erkennen ist, daß A₁ und A₂ auf der X-Achse und A₃ auf der Y-Achse liegen. Alle drei Anlenkpunkte A₁,A₂,A₃ sind außerdem in der XY-Ebene, in diesem Fall der Zeichenebene, positioniert.

Etwa im Zentrum der Objekthalterung 11 ist das Objekt 9 positioniert. Objekthalterung 11 und Objekt 9 sind dabei relativ zur Scan-Einrichtung so ausgerichtet, daß der Koordinatenursprung zumindest etwa in den Flächenzentren angeordnet ist.

Mit dieser Anordnung läßt sich das erfindungsgemäße Verfahren wie folgt ausführen, wobei zunächst davon ausgegangen wird, daß das Objekt 9 auf der Objekthalterung 11 grob ausgerichtet ist, das heißt die abzutastende Ebene XY möglicherweise noch nicht in der Fokusebene des Laser-Scan-Mikroskopes positioniert ist:

In einem ersten Verfahrenschritt wird die Scan-Einrichtung so angesteuert, daß der Diodenstrahl 16 (vgl. auch Fig.1 und Fig.2) auf einen Punkt P₁ gerichtet ist, der wie die Anlenkpunkte A₁ und A₂ auf der X-Achse, jedoch bevorzugt nahe dem Objektrand in Richtung -x, liegt. Wie weiter oben bereits beschrieben, wird nun anhand des Reflexes von Punkt P₁ durch Vergleich der Ist-Position mit dem Vergleich der in der Auswerteeinheit gespeicherten Soll-Position die Ablage des Punktes P₁ von der Fokusebene ermittelt.

Im nächsten Schritt wird die Scan-Einrichtung so angesteuert, daß der Laserstrahl auf einen Punkt P₂ der abzutastenden Ebene XY gerichtet ist, wobei der Punkt P₂ ebenso wie die Anlenkpunkte A₁ und A₂ auf der X-Achse, jedoch bevorzugt nahe dem Objektrand in Richtung +x, liegt. Für den Reflex von Punkt P₂ wird in derselben Weise die Abweichung von der Fokusebene ermittelt.

Die ermittelten Abweichungen für P₁ und P₂ werden als gegenläufige Stellbefehle an die Antriebselemente 20 und 21 ausgegeben, wodurch eine Verkippung (wie bereits dargestellt) um die Y-Achse veranlaßt wird, und zwar jeweils um den Betrag, der als Abweichung von der Soll-Lage ermittelt worden ist. Bei hoher Präzision ist die X-Achse nun parallel zu Fokusebene X'Y' ausgerichtet bzw. liegt bereits innerhalb der Fokusebene X'Y'.

Nachfolgend wird die Scan-Einrichtung so angesteuert, daß die Diodenstrahlung 16 auf einen Punkt P₃ gerichtet ist, der ebenso wie der Anlenkpunkt A₃ auf der Y-Achse, jedoch bevorzugt nahe dem Objektrand in Richtung -y liegt. Nun wird der Ist-Positionswert mit der Triangulations-Baugruppe 12 ebenso wie oben beschrieben erfaßt und aus der Abweichung zwischen Ist- und Soll-Position des Reflexes von P₃ auf der CCD-Zeile 15 ein Stellbefehl für das Antriebselement 22 ermittelt, an dieses ausgegeben und damit die Verkippung der Objekthalterung 11 um die X-Achse bewirkt, womit nunmehr auch die Ausrichtung der Y-Achse parallel zur Fokusebene X'Y' erzielt wird.

Optional können die genannten Verfahrensschritte nun wiederholt werden und, sofern noch Abweichungen zwischen Ist- und Soll-Positionswerten, die Reflexe der Punkte P₁,P₂,P₃ betreffend, meßbar sind, Lagekorrekturen in der vorbeschriebenen Weise veranlaßt werden. Darüber hinaus kann durch gleichzeitige Ansteuerung der Ansteuerelemente 20,21,22 mit gleicher Bewegungsrichtung eine Zustellung des Objektes 9 in der Koordinate Z soweit veranlaßt werden, bis die Reflexe von P₁,P₂,P₃ mit maximaler Intensität auf die CCD-Zeile abgebildet werden. Damit ist eine exakte Ausrichtung des Objektes 9 relativ zur Scan-Einrichtung erreicht.

Während der beschriebenen Verfahrensschritte kann ein Shutter 24 so angesteuert werden, daß die zur Fluoreszenzanregung der Probe bestimmte Laserstrahlung 2 blockiert ist.

### Bezugszeichenliste

- 1: Laser
- 2: Laserstrahl
- 3: strahllaufweitende Optik
- 4: Galvanometer-Scanner
- 5: Spiegel
- 6: Strahlteiler
- 7: Mikroskopstrahlengang
- 8: Mikroskopobjektiv
- 9: Objekt
- 10: Okular
- 11: Objekthalterung
- 12: Triangulations-Baugruppe
- 13: Laserdiode
- 14: Reader-Optik
- 15: CCD-Zeile
- 16: Diodenstrahlung
- 17: Strahlteiler
- 18,18.1,18.2: Positionen
- 19: Auswerteschaltung
- 20, 21, 22: Antriebselemente
- 23: Zugfedern
- 24: Shutter

## Patentansprüche

1. Verfahren zur Ausrichtung der optisch abzutastenden Ebene XY eines Objektes (9) zur Fokusebene X'Y' eines Laser-Scanners,
- wobei das Objekt (9) zunächst auf einer Objekthalterung (11) grob ausgerichtet wird,
**dadurch gekennzeichnet, daß**
- dann zeitlich nacheinander auf mindestens drei verschiedene, in der Ebene XY liegende Punkte P₁,P₂...Pₙ ein Laserstrahl gelenkt und dabei jeweils die von den Punkten P₁,P₂...Pₙ ausgehenden Reflexe auf einen positionsempfindlichen Detektor abgebildet werden,
- dort für jeden der Reflexe ein Ist-Postitionswert ermittelt und dieser mit einem gespeicherten Soll-Positionwert verglichen wird,
- aus den Abweichungen der Ist- von den Soll-Positionswerten Stellbefehle zur Neigungsänderung der Objekthalterung (11) gewonnen und
- die Neigungsänderung der Objekthalterung (11) soweit veranlaßt wird, bis sich die Punkte P₁,P₂...Pₙ in der Fokusebene X'Y' befinden.

2. Verfahren nach Anspruch 1, **dadurch gekennzeichnet, daß** drei Punkte P₁(x₁;y₁), P₂(x₂;y₂) und P₃(x₃;y₃) mit y₁=y₂= x₃=0 und x₁=x₂≠0; y₃≠0 angetastet werden, wobei ein Punkt P₀ mit x₀=y₀=0 etwa im Zentrum der Ebene XY liegt und P₁,P₂,P₃ bevorzugt Punkte nahe der Ränder der Ebene XY sind und wobei die Ermittlung der Abweichungen zwischen Ist- und Soll-Positionswerten nach dem Prinzip der Laser-Triangulation erfolgt.

3. Verfahren nach Anspruch 2, **dadurch gekennzeichnet, daß**
- Laser-Scanner und Objekt (9) zunächst so zueinander ausgerichtet werden, daß der Laserstrahl etwa auf die Position P₀ gerichtet ist,
- dann die Scan-Einrichtung so angesteuert wird, daß der Laserstrahl auf den Punkt P₁ gerichtet ist,
- nun der Ist-Positionswert für den Punkt P₁ erfaßt wird,
- dann die Scan-Einrichtung so angesteuert wird, daß der Laserstrahl auf den Punkt P₂ gerichtet ist,
- der Ist-Positionswert für den Punkt P₂ erfaßt wird,
- aus den Abweichungen der Ist- zu den Soll-Positionswerten der Punkte P₁ und P₂ Stellbefehle zur Verkippung der Objekthaltung (11) um die Y-Achse ermittelt werden und damit die Ausrichtung der X-Achse der Ebene XY parallel zur Fokusebene X'Y' veranlaßt wird,
- danach die Scan-Einrichtung so angesteuert wird, daß der Laserstrahl auf den Punkt P₃ gerichtet ist,
- nun der Ist-Positionswert für den Punkt P₃ erfaßt und mit dem Soll-Positionswert verglichen wird und
- aus der Abweichung von Ist- zu Soll-Positionswert des Punktes P₃ ein Stellbefehl zur Verkippung der Objekthaltung (11) um die X-Achse ermittelt und damit die Ausrichtung der Y-Achse der Ebene XY parallel zur Fokusebene X'Y' veranlaßt wird.

4. Verfahren nach Anspruch 3, **dadurch gekennzeichnet, daß** die genannten Schritte wiederholt werden und, sofern noch Abweichungen zwischen Ist- und Soll-Positionswerten, die Reflexe der Punkte P₁,P₂,P₃ betreffend, meßbar sind, in der beschriebenen Weise eine Ausrichtungskorrektur veranlaßt wird, bis keine Abweichungen mehr meßbar sind bzw. die Parallelität der Ebene XY mit der Fokusebene X'Y' eingestellt ist oder die Ebene XY in der Fokusebene X'Y' liegt.

5. Verfahren nach Anspruch 3 oder 4, **dadurch gekennzeichnet, daß** nach der Ausrichtung des Laserstrahls auf den Punkt P₁ eine Parallelverschiebung der Objekthaltung (11) in Z-Richtung veranlaßt wird, bis der Reflex von P₁ optimal auf den Detektor abgebildet wird.

6. Verfahren nach einem der vorgenannten Ansprüche, **dadurch gekennzeichnet, daß** nach der Ausrichtung der Ebene XY eine Parallelverschiebung der Objekthaltung (11) in Z-Richtung veranlaßt wird, bis die Reflexe von P₁,P₂,P₃ optimal auf den Detektor abgebildet werden.

7. Anordnung zur Lageerfassung der abzutastenden Ebene XY eines Objektes (9) und zu deren Positionierung in der Fokusebene X'Y' eines Laser-Scanners,
- mit einer Objekthalterung (11) zur Aufnahme und Grobausrichtung des Objektes (9),
**dadurch gekennzeichnet, daß**
- ein positionsempfindlicher Detektor zur Lokalisierung der Reflexe von drei in der Ebene XY liegenden und mit einem Laserstrahl angetasteten Punkten P₁,P₂,P₃,
- eine Auswerteschaltung (19) zur Bestimmung der Abweichung des Ist-Positionswertes eines jeden dieser Reflexe von dessen Soll-Positionwert auf dem Detektor und
- ein mit der Auswerteschaltung (19) verbundene Stelleinrichtung zur Neigungsänderung der Objekthalterung (11) relativ zur Fokusebene X'Y' des Laser-Scanners vorgesehen sind.

8. Anordnung nach Anspruch 7, **dadurch gekennzeichnet, daß** der Laser-Scanner einen auf einer drehbaren Achse gelagerten Spiegel (5) zur Ablenkung eines Laserstrahles in Richtung der Koordinate X' aufweist und die Objekthalterung (11) in Richtung der Koordinate Y' geradlinig verschiebbar ist, wobei die Bewegungsabläufe über mit Positionsmeldern gekoppelte Antriebe steuer- und kontrollierbar sind.

9. Anordnung nach Anspruch 7 oder 8, **dadurch gekennzeichnet, daß** der Detektor als CCD-Zeile (15) mit 256 Pixeln ausgebildet und Bestandteil einer Triangulations-Baugruppe (12) ist, die weiterhin mindestens eine Laserdiode (13) mit λ≥780nm als separate Strahlungsquelle zur Antastung der Punkte P₁,P₂,P₃ sowie eine Optik zur Einkopplung der Diodenstrahlung (16) in den Strahlengang des Laser-Scanners umfaßt.

10. Anordnung nach Anspruch 9, **dadurch gekennzeichnet, daß** die Diodenstrahlung (16) ein gaußförmiges Intensitätsprofil aufweist und die Ist-Position der von den Punkten P₁,P₂,P₃ reflektierten Diodenstrahlung (16) auf der CCD-Zeile (15) durch den Schwerpunkt der Gauß-Funktion definiert ist.

11. Anordnung nach einem der Ansprüche 7 bis 10, **dadurch gekennzeichnet, daß** in der Auswerteschaltung (19) ein Speicher mit den Punkten P₁,P₂,P₃ zugeordneten Soll-Positionswerten vorgesehen ist und die Auswerteeinheit (19) weiterhin über einen Differenzbildner verfügt, an dessen Eingängen jeweils ein Ist-Positionswert und ein Soll-Positionswert, jeweils bezogen auf einen der Punkte P₁,P₂,P₃, anliegen und an dessen Ausgang ein Differenzsignal abgreifbar ist, das als Stellsignal für die mit der Objekthalterung (11) gekoppelte Stelleinrichtung dient.

12. Anordnung nach Anspruch 11, **dadurch gekennzeichnet, daß** die Stelleinrichtung drei separat in Richtung der Koordinate Z zustellbare Antriebselemente (20,21,22) aufweist, die mit der Objekthalterung (11) über je einen Anlenkpunkte A₁,A₂,A₃ mechanisch verbunden sind, wobei die Objekthalterung (11) nach dem Prinzip der Dreipunktlagerung an den Anlenkpunkt A₁,A₂,A₃ anliegt und die Anlenkpunkt A₁,A₂,A₃ ebenso wie die Punkte P₁,P₂,P₃ in der Ebene XY liegen.

13. Anordnung nach Anspruch 12, **dadurch gekennzeichnet, daß** die Anlenkpunkte A₁,A₂ und die Punkte P₁,P₂ in der X-Achse der Ebene XY und/oder der Anlenkpunkt A₃ und der Punkt P₃ in der Y-Achse der Ebene XY liegen.

14. Anordnung nach Anspruch 13, **dadurch gekennzeichnet, daß** als Antriebselemente (20,21,22) piezoelektrische Antriebe oder mit Rotationsantrieben gekoppelte feingängige Gewindespindeln vorgesehen sind.

15. Anordnung nach Anspruch 14, **dadurch gekennzeichnet, daß** die Antriebselemente (20,21,22) in Ausnehmungen der Objekthalterung (11) eingreifen, die Objekthalterung (11) innerhalb der Ausnehmungen an den Antriebselementen (20,21,22) anliegt und Antriebselemente (20,21,22) und Objekthalterung (11) durch Federn (23) elastisch gegeneinander vorgespannt sind.

## Claims

1. Method of orienting the plane XY of an object (9) to be scanned optically, with respect to the focal plane X'Y' of a laser scanner,
- wherein the object (9) is initially oriented roughly on an object holder (11), **characterised in that**
- a laser beam is then directed successively with respect to time to at least three different points P₁, P₂...Pₙ lying in the plane XY and in each case the reflections emanating from the points P₁, P₂...Pₙ are imaged on a position-sensitive detector,
- at this point an actual position value is determined for each of the reflections and this actual position value is compared with a stored reference position value,
- adjustment commands for changing the inclination of the object holder (11) are obtained from the deviations of the actual from the reference position values, and
- the change in inclination of the object holder (11) is instigated until the points P₁, P₂...Pₙ are located in the focal plane X'Y'.

2. Method as claimed in claim 1, **characterised in that** three points P₁(x₁;y₁), P₂(x₂;y₂) and P₃(x₃;y₃) are contacted with y₁=y₂= x₃=0 and x₁=-x₂≠0; y₃≠0, wherein a point P₀ with x₀=y₀=0 lies approximately in the centre of the plane XY and P₁, P₂, P₃ are preferably points close to the edges of the plane XY and wherein the deviations between the actual and the reference position values are determined according to the laser triangulation principle.

3. Method as claimed in claim 2, **characterised in that**
- the laser scanner and the object (9) are initially oriented with respect to each other such that the laser beam is directed approximately to the position P₀,
- the scanning device is then controlled in such a manner that the laser beam is directed to the point P₁,
- the actual position value for the point P₁ is then detected,
- the scanning device is then controlled in such a manner that the laser beam is directed to the point P₂,
- the actual position value for the point P₂ is detected,
- adjustment commands for tilting the object holder (11) about the Y-axis are determined from the deviations between the actual and the reference position values of the points P₁ and P₂, and therefore the X-axis of the plane XY is oriented in parallel with the focal plane X'Y',
- the scanning device is then controlled in such a manner that the laser beam is directed to the point P₃,
- the actual position value for the point P₃ is detected and compared with the reference position value, and
- an adjustment command for tilting the object holder (11) about the X-axis is determined from the deviation between the actual and the reference position value of the point P₃, and therefore the Y-axis of the plane XY is oriented in parallel with the focal plane X'Y'.

4. Method as claimed in claim 3, **characterised in that** the said steps are repeated and insofar as it is still possible to measure deviations between the actual and reference position values relating to the reflections of the points P₁, P₂, P₃, an orientation correction is instigated in the manner described until no more deviations can be measured or the parallelism of the plane XY with the focal plane X'Y' is set or the plane XY lies in the focal plane X'Y'.

5. Method as claimed in claim 3 or 4, **characterised in that** after orientation of the laser beam to the point P₁ a parallel displacement of the object holder (11) in the Z-direction is instigated until the reflection of P₁ is imaged in an optimum manner on the detector.

6. Method as claimed in any one of the preceding claims, **characterised in that** after orientation of the plane XY a parallel displacement of the object holder (11) in the Z-direction is instigated until the reflections of P₁, P₂, P₃ are imaged in an optimum manner on the detector.

7. Arrangement for detecting the position of the plane XY of an object (9) to be scanned and for positioning same in the focal plane X'Y' of a laser scanner,
- having an object holder (11) for accommodating and roughly orienting the object (9),
**characterised in that**
- a position-sensitive detector is provided for locating the reflections of three points P₁, P₂, P₃ which lie in the plane XY and are contacted with a laser beam,
- an evaluating circuit (19) is provided for determining the deviation of the actual position value of each of these reflections from the reference position value thereof on the detector, and
- an adjusting device which is connected to the evaluating circuit (19) is provided for changing the inclination of the object holder (11) relative to the focal plane X'Y' of the laser scanner.

8. Arrangement as claimed in claim 7, **characterised in that** the laser scanner comprises a mirror (5), which is mounted on a rotatable shaft, for diverting a laser beam in the direction of the co-ordinate X' and the object holder (11) can be displaced in a linear manner in the direction of the co-ordinate Y', wherein the movement sequences can be controlled and monitored by way of drives which are coupled to position sensors.

9. Arrangement as claimed in claim 7 or 8, **characterised in that** the detector is formed as a CCD-line (15) with 256 pixels and is a component of a triangulation assembly (12) which further comprises at least one laser diode (13) with λ≥780nm as a separate radiation source for contacting the points P₁, P₂, P₃ and a lens system for coupling the diode radiation (16) into the beam path of the laser scanner.

10. Arrangement as claimed in claim 9, **characterised in that** the diode radiation (16) comprises a Gaussian intensity profile and the actual position of the diode radiation (16) reflected by the points P₁, P₂, P₃ is defined on the CCD-line (15) by the centroid of the Gaussian function.

11. Arrangement as claimed in any one of claims 7 to 10, **characterised in that** the evaluating circuit (19) is provided with a memory containing reference position values allocated to the points P₁, P₂, P₃ and the evaluating unit (19) also has a subtracter, wherein an actual position value and a reference position value, each related to one of the points P₁, P₂, P₃, are applied in each case to the inputs of the subtracter and a difference signal can be tapped at the output of the subtracter and serves as an adjusting signal for the adjusting device which is coupled to the object holder (11).

12. Arrangement as claimed in claim 11, **characterised in that** the adjusting device comprises three drive elements (20, 21, 22) which are separately adjustable in the direction of the co-ordinate Z and which are mechanically connected to the object holder (11) by way of an articulation point A₁, A₂, A₃ respectively, wherein the object holder (11) lies against the articulation point A₁, A₂, A₃ in accordance with the three-point support principle and the articulation points A₁, A₂, A₃ lie in the plane XY in the same way as the points P₁, P₂, P₃.

13. Arrangement as claimed in claim 12, **characterised in that** the articulation points A₁, A₂ and the points P₁, P₂ lie in the X-axis of the plane XY and/or the articulation point A₃ and the point P₃ lie in the Y-axis of the plane XY.

14. Arrangement as claimed in claim 13, **characterised in that** piezoelectric drives or precision-motion threaded spindles coupled to rotational drives are provided as the drive elements (20, 21, 22).

15. Arrangement as claimed in claim 14, **characterised in that** the drive elements (20, 21, 22) engage in recesses of the object holder (11), the object holder (11) lies inside the recesses against the drive elements (20, 21, 22) and the drive elements (20, 21, 22) and the object holder (11) are elastically pretensioned against each other by springs (23).

## Revendications

1. Procédé d'orientation du plan XY à explorer par balayage optique d'un objet (9) relativement au plan focal X'Y' d'un scanner laser,
- où l'objet (9) est d'abord orienté grossièrement sur un support d'objet (11),
**caractérisé**
- **en ce qu'**il est dirigé ensuite, successivement dans le temps, sur au moins trois points différents P₁, P₂... Pₙ, situés dans le plan XY un faisceau laser et, ce faisant, les réflexions partant des points P₁, P₂... Pₙ sont représentées sur un détecteur sensible à la position,
- **en ce qu'**est déterminée sur celui-ci pour chacune des réflexions une valeur de position réelle, et celle-ci est comparée à une valeur de position de consigne stockée,
- **en ce qu'**on obtient à partir des écarts des valeurs réelles et de consigne des commandes de positionnement pour modifier l'inclinaison du support d'objet (11) et
- la modification de l'inclinaison du support d'objet (11) est effectuée jusqu'à ce que les points P₁, P₂... Pₙ se trouvent dans le plan focal X'Y'.

2. Procédé selon la revendication 1, **caractérisé en ce que** trois points P₁ (x₁ ; y₁), P₂ (x₂ ; y₂) et P₃ (x₃ ; y₃) sont balayés avec y₁ = y₂ = x₃ = 0 et x₁ = - x₂ ≠ 0 ; y₃ ≠ 0, où un point P₀ avec x₀ = y₀ = 0 se situe à peu près au centre du plan XY, et P₁, P₂, P₃ sont de préférence des points près des bords du plan XY, et où la détermination des écarts entre les valeurs de position réelles et de consigne a lieu selon le principe de la triangulation laser.

3. Procédé selon la revendication 2, **caractérisé en ce que**
- le scanner laser et l'objet (9) sont d'abord orientés de telle sorte l'un relativement à l'autre que le faisceau laser soit dirigé à peu près sur la position P₀,
- qu'ensuite l'installation de balayage est commandée de façon que le faisceau laser soit dirigé sur le point P₁,
- que maintenant la valeur de position réelle du point P₁ est détectée,
- que l'installation de balayage est commandée de façon que le faisceau laser soit dirigé sur le point P₂,
- que la valeur de position réelle pour le point P₂ soit détectée,
- que sont déterminés à partir des écarts des valeurs de position réelles et de consigne des points P₁ et P₂ des instructions de commande pour faire basculer le support d'objet (11) autour de l'axe Y et qu'ainsi, l'orientation de l'axe X du plan XY parallèlement au plan focal X'Y' est entraînée,
- qu'ensuite l'installation de balayage est commandée de façon que le faisceau laser soit dirigé sur le point P₃,
- que maintenant la valeur de position réelles pour le point P₃ est détectée et est comparée avec la valeur de position de consigne et
- à partir de l'écart des valeurs de position réelles et de consigne du point P₃, une commande de positionnement pour faire basculer le support d'objet (11) autour de l'axe X est obtenu et de ce fait l'orientation de l'axe Y du plan XY parallèlement au plan focal X'Y' est provoquée.

4. Procédé selon la revendication 3, **caractérisé en ce que** les étapes indiquées sont répétées et, dans la mesure où encore des écarts entre les valeurs de position réelles et de consigne, qui concernent la réflexion des points P₁, P₂, P₃ peuvent être mesurés, on procède de la manière décrite à une correction d'orientation jusqu'à ce qu'on ne puisse plus mesurer des écarts respectivement jusqu'à ce que la parallélité du plan XY avec le plan focal X'Y' est réglée ou que le plan XY se situe dans le plan focal X'Y'.

5. Procédé selon la revendication 3 ou 4, **caractérisé en ce qu'**après l'orientation du faisceau laser sur le point P₁, un déplacement parallèle du support d'objet (11) est provoqué dans la direction Z jusqu'à ce que la réflexion du point P₁ soit représentée d'une manière optimale sur le détecteur.

6. Procédé selon l'une des revendications précédentes, **caractérisé en ce que**, après l'orientation du plan XY, un déplacement parallèle du support d'objet (11) dans la direction Z est provoqué jusqu'à ce que les réflexions de P₁, P₂, P₃ soient représentées d'une manière optimale sur le détecteur.

7. Agencement pour la détection de la position du plan à balayer XY d'un objet (9) et de son positionnement dans le plan focal X'Y' d'un scanner laser,
- avec un support d'objet (11) destiné à recevoir et à orienter grossièrement l'objet (9),
**caractérisé en ce que**
- sont prévus un détecteur réagissant à la position pour la localisation des réflexions de trois points P₁, P₂, P₃ situés dans le plan XY et balayés avec un faisceau laser,
- un montage d'évaluation (19) pour déterminer l'écart de la valeur de position réelle de chacune de ces réflexions de sa valeur de position de consigne sur le détecteur et
- une installation de positionnement reliée au montage d'évaluation (19) pour modifier l'inclinaison du support d'objet (11) relativement au plan focal X'Y' du faisceau laser.

8. Agencement selon la revendication 7, **caractérisé en ce que** le scanner laser présente un miroir (5) logé sur un axe tournant pour dévier un faisceau laser en direction de la coordonnée X', et que le support d'objet (11) est déplaçable en ligne droite dans la direction de la coordonnée Y', où les déroulements de mouvements peuvent être commandés et contrôlés par des commandes couplées aux capteurs de position.

9. Agencement selon la revendication 7 ou 8, **caractérisé en ce que** le détecteur est réalisé comme ligne CCD (15) avec 256 éléments d'images et fait partie d'un groupe d'éléments de triangulation (12), qui comprend en outre au moins une diode laser (13) avec λ ≥ 780 nm comme source de rayonnement séparée pour balayer les points P₁, P₂, P₃ ainsi qu'une optique pour le couplage du rayonnement (16) de la diode dans le trajet des rayons du scanner laser.

10. Agencement selon la revendication 9, **caractérisé en ce que** le rayonnement (16) de la diode présente un profil d'intensité gaussien, et **en ce que** la position réelle du rayonnement (16) de la diode réfléchi par les points P₁, P₂, P₃ est définie sur la ligne CCD (15) par le centre de gravité de la fonction de Gauss.

11. Agencement selon l'une des revendications 7 à 10, **caractérisé en ce qu'**il est prévu dans le montage d'évaluation (19) une mémoire avec les valeurs de position de consigne associées aux points P₁, P₂, P₃ et que l'unité d'évaluation (19) dispose en outre d'un générateur de différence aux entrées duquel s'appliquent respectivement une valeur de position réelle et une valeur de position de consigne, se référant respectivement à l'un des points P₁, P₂, P₃ et à la sortie duquel un signal de différence peut être prélevé qui sert de signal de positionnement, à l'installation de positionnement couplée avec le support d'objet (11).

12. Agencement selon la revendication 11, **caractérisé en ce que** l'installation de positionnement présente trois éléments d'entraînement (20, 21, 22) rapprochables séparément en direction de la coordonnée Z, qui sont reliés mécaniquement au support d'objet (11) par respectivement un point d'articulation A₁, A₂, A₃, où le support d'objet (11) s'applique selon le principe du montage à trois points au point d'articulation A₁, A₂, A₃, et les points d'articulation A₁, A₂, A₃, tout comme les points P₁, P₂, P₃, se situent dans le plan XY.

13. Agencement selon la revendication 12, **caractérisé en ce que** les points d'articulation A₁, A₂ et les points P₁, P₂ se situent dans l'axe X dans le plan XY et/ou le point d'articulation A₃ et le point P₃ dans l'axe Y du plan XY.

14. Agencement selon la revendication 13, **caractérisé en ce que** sont prévus comme éléments d'entraînement (20, 21, 22) des entraînements piézoélectriques ou des broches filetées à filetage fin couplées aux entraînements rotatifs.

15. Agencement selon la revendication 14, **caractérisé en ce que** les éléments d'entraînement (20, 21, 22) s'engagent dans des évidements du support d'objet (11), **en ce que** le support d'objet (11) s'applique à l'intérieur des évidements aux éléments d'entraînement (20, 21, 22) et **en ce que** les éléments d'entraînement (20, 21, 22) et le support d'objet (11) sont précontraints par des ressorts (23) élastiquement les uns contre les autres.
